# EUROPÄISCHE PATENTANMELDUNG

(11) **EP 1 905 943 A2**
(43) Veröffentlichungstag der Anmeldung: **02.04.2008**
(21) Anmeldenummer: 07018054.2
(22) Anmeldetag: 14.09.2007
(51) Int. Cl.: E06B 9/42, B60J 1/20, E06B 9/60

(54) **Rolloanordnung**

(30) Priorität: 26.09.2006 DE 102006047123
(71) Anmelder: BOS GmbH & Co. KG, 73760 Ostfildern (DE)
(72) Erfinder: Hansen, Melf, 75053 Gondelsheim (DE)
(74) Vertreter: Patentanwälte Ruff, Wilhelm, Beier, Dauster & Partner

(57) **Zusammenfassung**

Rolloanordnung (10), insbesondere zur Verwendung in einem Fahrzeug, mit einer sich in einer Haupterstreckungsrichtung erstreckenden hohlrohrförmigen Wickelwelle (12) zur aufgerollten Aufnahme eines abziehbaren flexiblen Flächengebildes und einer in einem Federaufnahmeabschnitt (12b) der Wickelwelle (12) eingelegten und als Schraubenfeder ausgebildeten Wickelfeder (14), wobei ein erstes Ende (14a) der Wickelfeder (14) mit der Wickelwelle (12) drehfest verbunden ist, - ein zweites Ende (14b) der Wickelfeder mit einem um eine Hauptachse der Wickelwelle (12) relativ zur Wickelwelle (12) drehbar ausgebildeten Halteabschnitt (18) drehfest verbunden ist, die Wickelfeder (14) einen Außendurchmesser aufweist, der geringer als der lnnendurchmesser des Federaufnahmeabschnitts (12b) ist, und die radiale Beweglichkeit der Wickelfeder (14) quer zur Haupterstreckungsrichtung der Wickelfeder (14) lediglich durch eine Innenwandung des Federaufnahmeabschnitts (12b) begrenzt wird.
Erfindungsgemäß ist die Wickelfeder (14) in einem entspannten Zustand in Haupterstreckungsrichtung um eine Längendifferenz länger ist als der Federaufnahmeabschnitt (12b), wobei die Längendifferenz derart bemessen ist, dass die Wickelfeder (14) in einem komprimierten und untordierten Zustand, in dem die Wickelfeder (14) in etwa auf die Länge (84) des Federaufnahmeabschnitts (12b) zusammengedrückt ist, im Wesentischen über ihre vollständige Länge an der Innenwandung des Federaufnahmeabschnitts (12b) anliegt.
Verwendung insbesondere für Rolloanordnungen in Fahrzeugen.

## Beschreibung

Die Erfindung betrifft eine Rolloanordnung, insbesondere zur Verwendung in einem Fahrzeug, mit einer sich in einer Haupterstreckungsrichtung erstreckenden hohlrohrförmigen Wickelwelle zur aufgerollten Aufnahme eines abziehbaren flexiblen Flächengebildes und einer in einem Federaufnahmeabschnitt der Wickelwelle eingelegten und als Schraubenfeder ausgebildeten Wickelfeder, wobei ein erstes Ende der Wickelfeder mit der Wickelwelle drehfest verbunden ist, ein zweites Ende der Wickelfeder mit einem um eine Hauptachse der Wickelwelle relativ zur Wickelwelle drehbar ausgebildeten Halteabschnitt drehfest verbunden ist, die Wickelfeder einen Außendurchmesser aufweist, der geringer als der Innendurchmesser des Federaufnahmeabschnitts ist, und die radiale Beweglichkeit der Wickelfeder quer zur Haupterstreckungsrichtung der Wickelfeder lediglich durch eine Innenwandung des Federaufnahmeabschnitts begrenzt wird.

Derartige Rolloanordnungen sind aus dem Stand der Technik bekannt. Bei ihnen ist die Länge der Wickelfeder so bemessen, dass die Wickelfeder eine mit dem Federaufnahmeabschnitt identische oder eine geringere Länge aufweist. Durch eine geringere Länge und den dadurch erzielten Zugzustand der Feder wird erreicht, dass die Feder unter Zugspannung im Inneren der Wickelwelle gehalten wird und eine Berührung zwischen der Innenwandung des Federaufnahmeabschnitts und der Wickelfeder bei geringen Erschütterungen der Feder verhindert wird.

Aus der DE 19902016 C1 ist ein Springrollo bekannt, bei dem eine Vorspannfeder zwischen einer innenliegenden Vorspannwelle und einer außenliegenden Rollowelle eingesetzt ist. Diese Vorspannfeder bildet in einem zusammengesetzten Zustand des Springrollos eine Druckfeder, wodurch erreicht wird, dass die Feder einen Vorspannwellenlagerzapfen nach außen drückt.

Als nachteilig am Stand der Technik wird angesehen, dass eine Geräuschentwicklung innerhalb der Wickelwelle, insbesondere durch Erschütterungen, nicht ausreichend gut verhindert wird.

### Aufgabe und Lösung

Aufgabe der Erfindung ist es, eine gattungsgemäße Rolloanordnung im Hinblick auf eine reduzierte Geräuschentwicklung zu verbessern.

Erfindungsgemäß ist die Wickelfeder in einem entspannten Zustand in Haupterstreckungsrichtung um eine Längendifferenz länger als der Federaufnahmeabschnitt, wobei die Längendifferenz derart bemessen ist, dass die Wickelfeder in einem komprimierten und untordierten Zustand, in dem die Wickelfeder in etwa auf die Länge des Federaufnahmeabschnitts zusammengedrückt ist, im Wesentlichen über ihre vollständige Länge an der Innenwandung des Federaufnahmeabschnitts anliegt.

Die elastische Komprimierung führt bei einer erfindungsgemäßen Rolloanordnung dazu, dass auch im untordierten Zustand kein freies Schwingen der Wickelfeder möglich ist. Dabei wird die Geräuschentwicklung nicht dadurch verhindert, dass die Feder zum Beispiel durch hohe Zugspannung nicht in Kontakt mit der Wickelwelle kommt, sondern dadurch, dass sie unabhängig vom Betriebszustand stets an der Innenwandung der Wickelwelle anliegt. Beim Drehen der Wickelwelle wird die Feder tordiert, wobei sie ständig im Kontakt mit der Wickelwelle bleibt. Das dabei entstehenden Reibungsmoment ist im Normalfall gegenüber dem für die Torsion erforderlichen Torsionsmoment vernachlässigbar. Gegebenenfalls kann durch eine entsprechende Werkstoffkombination oder eine Schmierung eine weitere Reduktion des Reibungsmoments erreicht werden.

In einer Weiterbildung der Erfindung ist der Halteabschnitt in Haupterstreckungsrichtung axial beweglich ausgebildet.

Dadurch kann der Halteabschnitt zumindest im begrenzten Maße durch die unter Druck stehende Wickelfeder nach außen gedrückt werden. Diese nach außen wirkende Kraft kann genutzt werden, um die Rolloanordnung spielfrei zu lagern. Hierzu ist vorzugsweise an beiden Enden der Wickelwelle ein Lagerbolzen vorgesehen, wobei der erste Lagerbolzen wickelwellenfest ist und der zweite Lagerbolzen am Halteabschnitt ausgebildet ist. Beim Einsetzen wird dieser Lagerbolzen durch eine Eindrückkraft gegen die Federkraft der Wickelfeder eingedrückt, so dass die Gesamtlänge der Rollanordnung verkürzt wird. In diesem verkürzten Zustand kann die Rollanordnung mit den Lagerzapfen in korrespondierende Zapfenausnehmungen einer Halterung eingefügt werden, so dass nach Entfallen der Eindrückkraft und Rückkehr des verschiebbaren Lagerbolzens in seine Ausgangslage eine sichere Befestigung der Wickelwelle erreicht ist.

Bei einer Weiterbildung der Erfindung ist die axiale Beweglichkeit des Halteabschnitts durch einen Anschlag begrenzt.

Der Halteabschnitt ist dadurch geeignet, die Wickelfeder sicher im Federaufnahmeabschnitt der Wickelwelle zu halten, ohne dass diese den Federaufnahmeabschnitt verlassen kann. Der Anschlag ist dabei vorzugsweise so ausgebildet, dass er den Halteabschnitt erst in einer Lage axial begrenzt, in der die Gesamtbreite der Wickelwelle vom ersten bis zum zweiten Lagerbolzen größer als eine korrespondierende Einbaubreite ist. So sind einerseits eine sichere Handhabung der Rolloanordnung im nicht eingebauten Zustand und andererseits ein spielfreies Betrieb der Rolloanordnung in der bestimmungsgemäßen Halterung möglich.

Bei einer Weiterbildung der Erfindung ist die Längendifferenz derart bemessen, dass eine Kontaktspur, entlang derer die Wickelfeder im komprimierten Zustand an der Innenwandung des Federaufnahmeabschnitts anliegt, die Form einer Helix mit mindestens einer Windung aufweist.

Die helixförmige Form, die die Wickelfeder hierfür einnimmt, verhindert auch bei starken Erschütterungen, dass die Wickelfeder ihre Lage innerhalb des Federaufnahmeabschnitts ändert. Unabhängig von der Richtung, in der die von der Erschütterung ausgehende Kraft wirkt, wird durch einen in entgegen dieser Richtung an der Wickelwellenwandung anliegenden Abschnitt der Wickelfeder verhindert, dass die Wickelfeder in Folge ihrer Massenträgheit ihre Lage an der Wickelwellenwandung ändert. Die Steigungsrichtung der Kontaktspurhelix ist dabei vorzugsweise so gewählt, dass eine Tordierung der Wickelfeder im Zuge eines Abziehens des Flächengebildes zu einer Reduzierung der Steigung der Kontaktspurhelix und einer Erhöhung der Windungszahl der Kontaktspur führt. Diese Orientierung verhindert, dass die Kontaktspurhelix im Zuge der Torsion der Wickelfeder den Kontakt mit der Wickelwellenwandung verliert.

Bei einer Weiterbildung der Erfindung beträgt die Längendifferenz mindestens 10%, vorzugsweise mindestens 20%.

Eine Längendifferenz von 10%, vorzugsweise 20%, hat sich als besonders vorteilhaft erwiesen. Sie resultiert in einer helixförmigen Ausprägung der Kontaktspur innerhalb des Federaufnahmeabschnitts und erhöht das Gewicht der Rolloanordnung nur unerheblich.

Bei einer Weiterbildung der Erfindung weist die Wickelfeder eine haftungsmindernde und/oder geräuschmindernde Umhüllung auf.

Eine solche Umhüllung kann sowohl so ausgebildet sein, dass sie eine jede Windung der Wickelfeder einzeln umgibt, als auch als Schlauchumhüllung ausgebildet sein, die die Wickelfeder lediglich in ihrer Gänze umhüllt. Die Umhüllung sorgt dafür, dass die Reibungsverluste beim Tordieren der Wickelfeder im Zuge des Abziehens des Flächengebildes vermindert werden. Als rein geräuschmindernde Umhüllung bieten sich beispielsweise Gummi- oder Kunststoffumhüllungen an. Als haftungsmindernde Umhüllungen können beispielsweise Chrombeschichtungen an der Innenseite des Federaufnahmeabschnitts und der Wickelfeder dienen.

### Kurzbeschreibung der Zeichnungen

Weitere Vorteile und Merkmale der Erfindung ergeben sich aus den Ansprüchen sowie der nachfolgenden Beschreibung eines bevorzugten Ausführungsbeispiels der Erfindung, das anhand der Zeichnungen dargestellt ist. Dabei zeigt:
- Fig. 1: eine erfindungsgemäße Rolloanordnung mit geöffnetem Federaufnahmeabschnitt und
- Fig. 2: die Rolloanordnung der Fig. 1 mit komprimierter Wickelfeder in dem geschlossenem Federaufnahmeabschnitt.

### Detaillierte Beschreibung der Ausführungsbeispiele

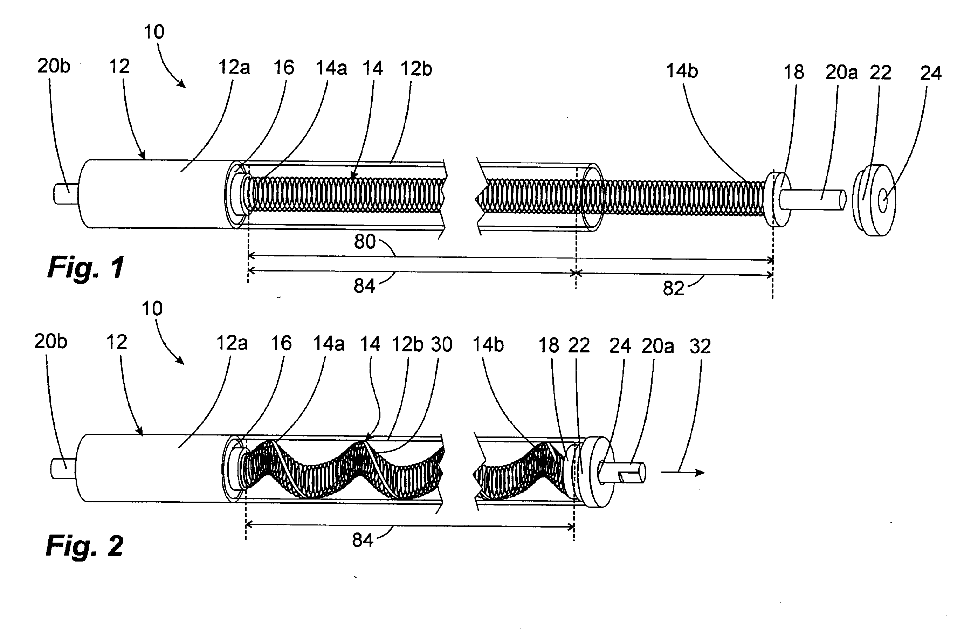

Fig. 1 zeigt eine Rolloanordnung 10, deren wesentliche Komponenten eine Wickelwelle 12 und eine Wickelfeder 14 sind. Die Wickelwelle 12 ist als Hohlrohr ausgebildet, welches bei der dargestellten Ausführungsform zum besseren Verständnis teilweise transparent dargestellt ist. Die Wickelwelle dient der Aufnahme eines Flächengebildes in aufgerollter Form, wobei dieses Flächengebilde in den Figuren nicht dargestellt ist. In der Wickelwelle 12 ist eine Federaufnahme 16, vorgesehen, die drehfest mit der Wickelwelle 12 einerseits und einem ersten Ende 14a der Wickelfeder 14 verbunden ist. Die Federaufnahme 16 teilt die Wickewelle in einen federlosen Abschnitt 12a und einen Federaufnahmeabschnitt 12b.

Die Wickelfeder 14 weist im entspannten Zustand eine Länge 80 auf, die um eine Differenzlänge 82 länger ist als eine Länge 84 des Federaufnahmeabschnitts 12b. Am zweiten Ende der Wickelfeder 14 ist ein Halteabschnitt 18 vorgesehen, der mit dem zweiten Ende 14b der Wickelfeder 14 drehfest verbunden ist. Der Halteabschnitt 18 weist einen Grundkörper mit zylindrischer Form auf, dessen Durchmesser etwas geringer ist als der Innendurchmesser des Federaufnahmeabschnitts 12b. Am Halteabschnitt 18 sowie an der dem Federaufnahmeabschnitt 12b gegenüberliegenden Seite der Wickelwelle 12 sind Lagerbolzen 20a, 20b vorgesehen, die der Befestigung der Rolloanordnung in einer nicht dargestellten Halterung dienen. Der Lagerbolzen 20a weist eine einseitige Abflachung auf, die dem Zweck dient, den Lagerbolzen 20a drehfest mit der besagten Halterung verbinden zu können.

Zum Verschließen des Lagerabschnitts ist ein Verschluss 22 vorgesehen der so dimensioniert ist, dass er mit der Innenwandung des Federaufnahmeabschnitts 12b eine Presspassung bildet. Stattdessen bzw. zusätzlich können der Verschluss und/oder der Federaufnahmeabschnitt formschlüssig, beispielsweise durch ein Gewinde, oder auch stoffschlüssig, beispielsweise mittels einer Klebeverbindung, verbindbar sein.

Zentral im Verschluss ist eine axiale Durchbrechung 24 angeordnet, die einen gegenüber dem Außendurchmesser des Lagerbolzens 20a vergrößerten Innendurchmesser aufweist.

Die Fig. 2 zeigt die Rolloanordnung 10 in einem einbaufertigen Zustand. Dabei ist die Wickelfeder 14 auf die Länge 84 komprimiert, so dass sie vollständig im Federaufnahmeabschnitt 12b der Wickelwelle 12 liegt. Der Halteabschnitt 18 ist in diesem Zustand ebenfalls innerhalb der Wickelwelle 12 angeordnet. Das offene Ende des Federaufnahmeabschnitts 12b ist mit dem Verschluss 22 verschlossen, so dass ein Ausrücken des Halteabschnitts 18 aus der Wickelwelle 12 unterbunden wird. Der Lagerbolzen 20a ragt durch die Bohrung 24 des Verschlusses 22 hindurch nach außen.

Die Wickelfeder 14 ist in dem dargestellten komprimierten Zustand soweit komprimiert, dass sie fast auf vollständiger Länge an der Innenwandung des Federaufnahmeabschnitts 12b anliegt. Die Kontaktspur 30, die den Kontaktbereich zwischen der Wickelfeder 14 und der Wickelwelle 12 verdeutlicht, ist schraubenförmig geformt, so dass der Wickelfeder 14 keine radiale Bewegungsfreiheit mehr verbleibt. In diesem Zustand führen selbst starke Erschütterungen der Rolloanordnung 10 nicht zu einer Relativverschiebung oder einem Aufeinanderschlagen der Wickelfeder 14 einerseits und des Federaufnahmeabschnitts 12b andererseits. Eine störende Geräuschentwicklung durch Erschütterungen wird somit weitgehend vermieden. Die Kompression der Wickelfeder 14 sorgt darüber hinaus dafür, dass der Bolzen 20a mit einer in Richtung des Pfeils 32 wirkenden Kraft beaufschlagt wird, so dass die Rolloanordnung im eingesetzten Zustand spielfrei gelagert werden kann.

## Patentansprüche

1. Rolloanordnung (10), insbesondere zur Verwendung in einem Fahrzeug, mit
- einer sich in einer Haupterstreckungsrichtung erstreckenden hohlrohrförmigen Wickelwelle (12) zur aufgerollten Aufnahme eines abziehbaren flexiblen Flächengebildes und
- einer in einem Federaufnahmeabschnitt (12b) der Wickelwelle (12) eingelegten und als Schraubenfeder ausgebildeten Wickelfeder (14),
wobei
- ein erstes Ende (14a) der Wickelfeder (14) mit der Wickelwelle (12) drehfest verbunden ist,
- ein zweites Ende (14b) der Wickelfeder mit einem um eine Hauptachse der Wickelwelle (12) relativ zur Wickelwelle (12) drehbar ausgebildeten Halteabschnitt (18) drehfest verbunden ist,
- die Wickelfeder (14) einen Außendurchmesser aufweist, der geringer als der Innendurchmesser des Federaufnahmeabschnitts (12b) ist, und
- die radiale Beweglichkeit der Wickelfeder (14) quer zur Haupterstreckungsrichtung der Wickelfeder (14) lediglich durch eine Innenwandung des Federaufnahmeabschnitts (12b) begrenzt wird,
**dadurch gekennzeichnet, dass**
- die Wickelfeder (14) in einem entspannten Zustand in Haupterstreckungsrichtung um eine Längendifferenz (82) länger ist als der Federaufnahmeabschnitt (12b), wobei die Längendifferenz (82) derart bemessen ist, dass die Wickelfeder (14) in einem komprimierten und untordierten Zustand, in dem die Wickelfeder (14) in etwa auf die Länge (84) des Federaufnahmeabschnitts (12b) zusammengedrückt ist, im Wesentlichen über ihre vollständige Länge an der Innenwandung des Federaufnahmeabschnitts (12b) anliegt.

2. Rolloanordnung nach Anspruch 1,
**dadurch gekennzeichnet, dass**
der Haltabschnitt (18) in Haupterstreckungsrichtung axial beweglich ausgebildet ist.

3. Rolloanordnung nach Anspruch 2,
**dadurch gekennzeichnet, dass**
die axiale Beweglichkeit des Halteabschnitts (18) durch einen Anschlag (22) begrenzt ist.

4. Rolloanordnung nach einem der vorstehenden Ansprüche,
**dadurch gekennzeichnet, dass**
die Längendifferenz (82) derart bemessen ist, dass eine Kontaktspur (30), entlang derer die Wickelfeder (14) im komprimierten Zustand an der Innenwandung des Federaufnahmeabschnitts (12b) anliegt, die Form einer Helix mit mindestens einer Windung aufweist.

5. Rolloanordnung nach einem der vorstehenden Ansprüche,
**dadurch gekennzeichnet, dass**
die Längendifferenz (82) mindestens 10%, vorzugsweise mindestens 20% der Länge (84) des Federaufnahmeabschnitts (12b) beträgt.

6. Rolloanordnung nach einem der vorstehenden Ansprüche,
**dadurch gekennzeichnet, dass**
die Wickelfeder eine haftungsmindernde und/oder geräuschmindernde Umhüllung aufweist.
